(19) Europäisches Patentamt / European Patent Office / Office européen des brevets

(11) EP 4 280 497 A1

(12) **EUROPEAN PATENT APPLICATION**
published in accordance with Art. 153(4) EPC

(43) Date of publication:
22.11.2023 Bulletin 2023/47

(21) Application number: 21918484.3

(22) Date of filing: 14.01.2021

(51) International Patent Classification (IPC):
$H04L\ 1/18$ (2023.01)      $H04L\ 5/00$ (2006.01)
$H04W\ 72/04$ (2023.01)      $H04W\ 76/14$ (2018.01)

(52) Cooperative Patent Classification (CPC):
Y02D 30/70

(86) International application number:
PCT/CN2021/071932

(87) International publication number:
WO 2022/151276 (21.07.2022 Gazette 2022/29)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Beijing Xiaomi Mobile Software Co.,
Ltd.
Beijing 100085 (CN)

(72) Inventor: ZHAO, Wensu
Beijing 100085 (CN)

(74) Representative: dompatent von Kreisler Selting
Werner -
Partnerschaft von Patent- und Rechtsanwälten
mbB
Deichmannhaus am Dom
Bahnhofsvorplatz 1
50667 Köln (DE)

(54) **COMMUNICATION METHOD, COMMUNICATION APPARATUS AND STORAGE MEDIUM**

(57)     Disclosed are a communication method, a communication apparatus and a storage medium. The communication method is applied to a first user equipment. The communication method comprises: in response to determining that a resource conflict is about to occur in a reserved resource in which a second user equipment performs data transmission, sending a pre-conflict indication to the second user equipment, wherein the pre-conflict indication is used for indicating that a resource conflict is about to occur in the reserved resource in which the second user equipment performs data transmission. By means of the present disclosure, an indication of whether a resource conflict occurs in a reserved resource, in which data transmission is performed, is realized.

S11

sending a potential collision indication to a second UE in response to determining an impending resource collision on a reserved resource for data transmission by the second UE

**FIG. 3**

EP 4 280 497 A1

**Description**

**TECHNICAL FIELD**

The disclosure relates to the field of communication technologies, and in particular, to a communication method, a communication apparatus, and a storage medium.

**BACKGROUND**

With the development of long term evolution (LTE) wireless communication protocols, the third generation partnership (3GPP) is formulating a sidelink standard as a direct communication standard from one terminal to another terminal. A first standard of a new radio (NR) sidelink has been completed in release 16 since July 2020. A solution of the NR sidelink is mainly applied to vehicle to everything (V2X) and public security. For the V2X and public security, release 16 does not fully support service requirements and operating schemes due to time constraints, but service and system aspects (SA) are enhanced in release 17 NR Sidelink. For example, architecture enhancement and system enhancement for supporting advanced V2X services for the 3GPP has been added in release 17. In addition, other business cases related to the NR sidelink are being studied in an SA workgroup, such as a network-controlled interaction service, an enhanced energy efficiency relay, a wide coverage, and an audio-visual service production. Therefore, at the 86th session of 3GPP, in a release 17 program, the NR sidelink enhancement is taken as a work program, to enhance the reliability of sidelink transmission and reduce the delay.

In the NR sidelink enhancement, user equipment (UE) A that is for the sidelink communication may send an assistant resource set to UEB whose resource selection mode is a Mode2, and the UEB takes this into consideration when performing resource selection on its own data transmission. However, in the related art, a candidate resource determined by the UEB in the assistant resource set provided by the UEA for the UEB may overlap with resources reserved for other UEs, thus an impending resource collision on the reserved resource for data transmission by the second UE may occur.

**SUMMARY**

To overcome the problems existing in the related art, embodiments of the disclosure provide a communication method, a communication apparatus, and a storage medium.

According to a first aspect of embodiments of the disclosure, a communication method is provided. The method is applicable to a first user equipment (UE). The method includes: sending a potential collision indication to a second UE in response to determining an impending resource collision on a reserved resource for data transmission by the second UE, the potential collision indication for indicating the impending resource collision on the reserved resource for data transmission by the second UE.

In an implementation, sending the potential collision indication to the second UE includes:
sending the potential collision indication to the second UE by using a physical sidelink feedback channel (PSFCH) resource mapped by a first physical sidelink shared channel (PSSCH) transmission resource; in which the first PSSCH is a PSSCH on a slot where a first physical sidelink control channel (PSCCH) is located and the first PSCCH is a PSCCH for indicating a reserved time-frequency resource for a next PSSCH transmission.

In an implementation, the communication method further includes: sending hybrid automatic repeat request (HARQ) feedback by the PSFCH resource.

In an implementation, the HARQ feedback and the potential collision indication are sent in the following manner: carrying the HARQ feedback and the potential collision indication by a first PSFCH format.

In an implementation, sending the HARQ feedback and the potential collision indication includes: sending the HARQ feedback and the potential collision indication by multiplexing the HARQ feedback and the potential collision indication on the PSFCH resource with the same time and frequency domain.

In an implementation, sending the HARQ feedback and the potential collision indication by multiplexing the HARQ feedback and the potential collision indication on the PSFCH resource with the same time and frequency domain includes: sending a base sequence by using the PSFCH resource with the same time and frequency domain and indicating the HARQ feedback and the potential collision indication by shifting cyclically the base sequence.

In an implementation, sending the HARQ feedback and the potential collision indication includes: sending the HARQ feedback by a PSFCH resource in a first frequency domain and sending the potential collision indication by a PSFCH resource in a second frequency domain.

In an implementation, the PSFCH resource in the second frequency domain and the PSFCH resource in the second frequency domain have the same time domain resource.

In an implementation, sending the HARQ feedback and the potential collision indication includes:

sending the HARQ feedback at a first moment and sending the potential collision indication at a second moment, the second moment being earlier than the first moment.

In an implementation, the communication method further includes: obtaining first indication information and second indication information, the first indication information for indicating a PSFCH resource used for sending the HARQ feedback and the second indication information for indicating a PSFCH resource used for sending the potential collision indication.

In an implementation, the first indication information and the second indication information are carried in a radio resource control (RRC) signaling.

In an implementation, a time interval between a moment when the potential collision indication is sent to the second UE and a moment when the impending resource collision occurs on the second UE is less than or equal to a time interval threshold.

In an implementation, the time interval threshold is determined according to an RRC signaling.

According to a second aspect of embodiments of the disclosure, a communication method is provided. The method is applicable to a second UE. The method includes: receiving a potential collision indication from a first UE, the potential collision indication for indicating an impending resource collision on a reserved resource for data transmission by the second UE; and performing resource selection according to the potential collision indication.

In an implementation, receiving the potential collision indication from the first UE includes: receiving the potential collision indication from the first UE by using a PSFCH resource mapped by a first PSSCH transmission resource; in which the first PSSCH is a PSSCH on a slot where a first PSCCH is located and the first PSCCH is a PSCCH for indicating a reserved time-frequency resource for a next PSSCH transmission.

In an implementation, the communication method further includes: receiving HARQ feedback by the PSFCH resource.

In an implementation, the HARQ feedback and the potential collision indication are received in the following manner: receiving the HARQ feedback and the potential collision indication by a first PSFCH format.

In an implementation, receiving the HARQ feedback and the potential collision indication includes: receiving the HARQ feedback and the potential collision indication by the PSFCH resource with the same time and frequency domain.

In an implementation, a base sequence is received by using the PSFCH resource with the same time and frequency domain and the HARQ feedback and the potential collision indication are determined according to the base sequence cyclically shifted.

In an implementation, receiving the HARQ feedback and the potential collision indication includes: receiving the HARQ feedback by a PSFCH resource in a first frequency domain and receiving the potential collision indication by a PSFCH resource in a second frequency domain.

In an implementation, the PSFCH resource in the second frequency domain and the PSFCH resource in the second frequency domain have the same time domain resource.

In an implementation, receiving the HARQ feedback and the potential collision indication includes: receiving the HARQ feedback at a first moment and receiving the potential collision indication at a second moment, the second moment being earlier than the first moment.

In an implementation, the communication method further includes: obtaining first indication information and second indication information, the first indication information for indicating a PSFCH resource used for receiving the HARQ feedback and the second indication information for indicating a PSFCH resource used for receiving the potential collision indication.

In an implementation, the first indication information and the second indication information are carried in an RRC signaling.

In an implementation, a time interval between a moment when the potential collision indication is received and a moment when the impending resource collision occurs on the second UE is less than or equal to a time interval threshold.

In an implementation, the time interval threshold is determined according to an RRC signaling.

According to a third aspect of embodiments of the disclosure, a communication apparatus is provided. The apparatus is applicable to a first UE. The apparatus includes:

a processing unit, configured to determine an impending resource collision on a reserved resource for data transmission by a second UE; and a sending unit, configured to send a potential collision indication to the second UE in response to the processing unit determining the impending resource collision on the reserved resource for data transmission by the second UE, the potential collision indication for indicating the impending resource collision on the reserved resource for data transmission by the second UE.

In an implementation, the sending unit is configured to send the potential collision indication to the second UE in the following manner:

sending the potential collision indication to the second UE by using a PSFCH resource mapped by a first PSSCH transmission resource; in which the first PSSCH is a PSSCH on a slot where a first PSCCH is located and the first PSCCH is a PSCCH for indicating a reserved time-frequency resource for a next PSSCH transmission.

In an implementation, the sending unit is further configured to send HARQ feedback by the PSFCH resource.

In an implementation, the sending unit is configured to carry the HARQ feedback and the potential collision indication by a first PSFCH format.

In an implementation, the sending unit is configured to send the HARQ feedback and the potential collision indication by multiplexing the HARQ feedback and the potential collision indication on the PSFCH resource with the same time and frequency domain.

In an implementation, the sending unit is configured to send a base sequence by using the PSFCH resource with the same time and frequency domain and indicate the HARQ feedback and the potential collision indication by shifting cyclically the base sequence.

In an implementation, the sending unit is configured to send the HARQ feedback by a PSFCH resource in a first frequency domain and send the potential collision indication by a PSFCH resource in a second frequency domain.

In an implementation, the PSFCH resource in the second frequency domain and the PSFCH resource in the second frequency domain have the same time domain resource.

In an implementation, the sending unit is configured to send the HARQ feedback at a first moment and sending the potential collision indication at a second moment, the second moment being earlier than the first moment.

In an implementation, the communication apparatus further includes a receiving unit configured to obtain first indication information and second indication information, the first indication information for indicating a PSFCH resource used for sending the HARQ feedback and the second indication information for indicating a PSFCH resource used for sending the potential collision indication.

In an implementation, the first indication information and the second indication information are carried in an RRC signaling.

In an implementation, a time interval between a moment when the potential collision indication is sent to the second UE and a moment when the impending resource collision occurs on the second UE is less than or equal to a time interval threshold.

In an implementation, the time interval threshold is determined according to an RRC signaling.

According to a fourth aspect of embodiments of the disclosure, a communication apparatus is provided. The apparatus is applicable to a second UE. The communication apparatus includes:

a receiving unit, configured to receive a potential collision indication from a first UE, the potential collision indication for indicating an impending resource collision on a reserved resource for data transmission by the second UE; and a processing unit, configured to perform resource selection according to the potential collision indication.

In an implementation, the receiving unit is configured to receive the potential collision indication from the first UE by using a PSFCH resource mapped by a first PSSCH transmission resource; in which the first PSSCH is a PSSCH on a slot where a first PSCCH is located and the first PSCCH is a PSCCH for indicating a reserved time-frequency resource for a next PSSCH transmission.

In an implementation, the receiving unit is configured to receive HARQ feedback by the PSFCH resource.

In an implementation, the receiving unit is configured to receive the HARQ feedback and the potential collision indication by a first PSFCH format.

In an implementation, the receiving unit is configured to receive the HARQ feedback and the potential collision indication by the PSFCH resource with the same time and frequency domain.

In an implementation, the receiving unit is configured to receive a base sequence by using the PSFCH resource with the same time and frequency domain and determine the HARQ feedback and the potential collision indication according to the base sequence cyclically shifted.

In an implementation, the receiving unit is configured to receive the HARQ feedback by a PSFCH resource in a first frequency domain and receive the potential collision indication by a PSFCH resource in a second frequency domain.

In an implementation, the PSFCH resource in the second frequency domain and the PSFCH resource in the second frequency domain have the same time domain resource.

In an implementation, the receiving unit is configured to receive the HARQ feedback at a first moment and receive the potential collision indication at a second moment, the second moment being earlier than the first moment.

In an implementation, the receiving unit is configured to obtain first indication information and second indication information, the first indication information for indicating a PSFCH resource used for receiving the HARQ feedback and the second indication information for indicating a PSFCH resource used for receiving the potential collision indication.

In an implementation, the first indication information and the second indication information are carried in an RRC signaling.

In an implementation, a time interval between a moment when the potential collision indication is received and a moment when the impending resource collision occurs on the second UE is less than or equal to a time interval threshold.

In an implementation, the time interval threshold is determined according to an RRC signaling.

According to a fifth aspect of embodiments of the disclosure, a communication device is provided. The communication device includes:

a processor; and a memory for storing instructions executable by the processor.

The processor is configured to perform the communication method described in the first aspect or any implementation of the first aspect.

According to a sixth aspect of embodiments of the disclosure, a communication device is provided. The communication device includes:

a processor; and a memory for storing instructions executable by the processor.

The processor is configured to perform the communication method described in the second aspect or any implementation of the second aspect.

According to a seventh aspect of embodiments of the disclosure, a non-transitory computer-readable storage medium is provided. When instructions in the storage medium are executed by a processor, a UE is caused to perform the communication method described in the first aspect or any implementation of the first aspect.

According to an eighth aspect of embodiments of the disclosure, a non-transitory computer-readable storage medium is provided. When instructions in the storage medium are executed by a processor, a UE is caused to perform the communication method described in the second aspect or any implementation of the second aspect.

The technical solutions provided in the embodiments of the disclosure may include the following beneficial effects. When the impending resource collision on the reserved resource for data transmission is determined, the potential collision indication is sent to the second UE, so as to realize the indication whether there is the impending resource collision on the reserved resource for data transmission.

It is to be understood that both the foregoing general description and the following detailed description are exemplary and explanatory only and are not restrictive of the disclosure.

## BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.

FIG. 1 is a schematic diagram of a sidelink communication system according to some embodiments.

FIG. 2 is a schematic diagram illustrating an impending resource collision on a reserved resource according to some embodiments.

FIG. 3 is a flow chart of a communication method according to some embodiments.

FIG. 4 is a schematic diagram illustrating a PSFCH resource for transmitting a potential collision indication according to some embodiments of the disclosure.

FIG. 5 is a flow chart of a communication method according to some embodiments.

FIG. 6 is a flow chart of a communication method according to some embodiments.

FIG. 7 is a flow chart of a communication method according to some embodiments.

FIG. 8 is a flow chart of a communication method according to some embodiments.

FIG. 9 is a schematic diagram of distinguishing HARQ feedback and a potential collision indication by cycle shifting according to some embodiments of the disclosure.

FIG. 10 is a flow chart of a communication method according to some embodiments.

FIG. 11 is a flow chart of a communication method according to some embodiments.

FIG. 12 is a schematic diagram illustrating an independent configuration of a resource for a potential collision indication and a resource for HARQ feedback by an RRC signaling, according to some embodiments.

FIG. 13 is a flow chart of a communication method according to some embodiments.

FIG. 14 is a flow chart of a communication method according to some embodiments.

FIG. 15 is a flow chart of a communication method according to some embodiments.

FIG. 16 is a flow chart of a communication method according to some embodiments.

FIG. 17 is a flow chart of a communication method according to some embodiments.

FIG. 18 is a flow chart of a communication method according to some embodiments.

FIG. 19 is a flow chart of a communication method according to some embodiments.

FIG. 20 is a flow chart of a communication method according to some embodiments.

FIG. 21 is a block diagram of a communication apparatus according to some embodiments.

FIG. 22 is a block diagram of a communication apparatus according to some embodiments.

FIG. 23 is a block diagram of a device for communication according to some embodiments.

**DETAILED DESCRIPTION**

Reference will now be made in detail to embodiments, examples of which are illustrated in the accompanying drawings. The following description refers to the accompanying drawings in which the same numbers in different accompanying drawings represent the same or similar elements unless otherwise represented. The implementations set forth in the following description of the embodiments do not represent all implementations consistent with the disclosure. Instead, they are merely examples of apparatuses and methods consistent with aspects related to the disclosure as recited in the appended claims.

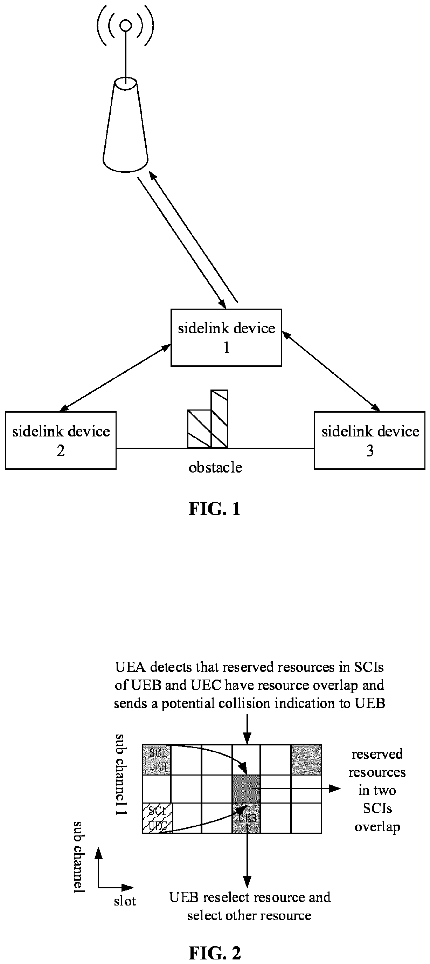

A communication method provided in embodiments of the disclosure is applicable to a sidelink communication system as illustrated in FIG. 1. As illustrated in FIG. 1, in a sidelink scenario among sidelink devices, a network device configures transmission parameters for data transmission for sidelink device 1. Sidelink transmission is performed on sidelink device 1, sidelink device 2, and sidelink device 3. There may be an obstacle between sidelink device 2 and sidelink device 3. Communication links between the network device and sidelink device 1 are an uplink and a downlink. A link between a sidelink device and another sidelink device is a sidelink.

In the disclosure, a sidelink communication scenario among sidelink devices may be a vehicle to everything (V2X) service scenario. V represents a vehicle-mounted device and X represents any object that interacts with the vehicle-mounted device. X mainly includes a vehicle-mounted device, a handheld device, a traffic side infrastructure, and a network. Information patterns of V2X interaction include vehicle to vehicle (V2V) interaction, vehicle to infrastructure (V2I) interaction, vehicle to pedestrian (V2P) interaction, and vehicle to network (V2N) interaction.

With the development of the new fifth generation (5G) mobile communication technology, the 5G NR technology is used in 3GPP Rel-16 to support new V2X communication services and scenarios, such as vehicles platooning, extended sensors, advanced driving, and remote driving. In general, the 5G V2X sidelink may provide higher communication rate, shorter communication delay, and more reliable communication quality.

The sidelink communication scenario among sidelink devices may be a device to device (D2D) communication scenario. In embodiments of the disclosure, the sidelink devices for sidelink communication may include various handheld devices, vehicle-mounted devices, wearable devices, and computing devices, which are with wireless communication functions, or other processing devices connected to wireless modems, as well as various forms of UEs, mobile stations (MSs), terminals, terminal equipments, etc. For convenience of description, in embodiments of the disclosure, it is illustrated by taking a sidelink device being a UE for an example.

The NR sidelink enhancement may improve transmission reliability and reduce delay. In the NR sidelink enhancement, a 3GPP work group has concluded that a manner for assisting in resource selection between UEs is required in enhancing a Mode2 resource allocation. Two UEs are specified in the manner. For example, UEA is an assistance UE of UEB and UEB refers to a UE that needs to select a resource for data that to be sent by UEB itself. UEA may determine a resource set and sends the resource set to UEB by means of a Mode2 and UEB may consider the resource set sent by UEA when selecting the resource(s). That is, it can be understood as UEB uses an assistance resource set assistance mechanism for resource selection. UEB may send data to UEA and/or other UE.

In the Mode 2 resource allocation manner, resource selection is performed in a resource-aware manner. The UE decodes sidelink control information (SCI) and measures a demodulation reference signal (DMRS) of a physical sidelink shared channel (PSSCH) to determine a candidate resource set. However, due to the half-duplex problem, when UEB sends SCI, it may not receive SCI from other UE (such as UEC) in the same slot, resulting in a time-frequency resource reserved for UEB overlapping with a time-frequency resource reserved for other UE, that is, information fields of time resource assignment and frequency resource assignment carried in SCIs of UEB and other UE are the same. This may lead to an impending resource collision on a reserved resource for data transmission by the UE, that is, a potential collision.

FIG. 2 is a schematic diagram illustrating an impending resource collision on a reserved resource. Referring to FIG. 2, in sub channel 1, UEA decodes SCI of UEB to obtain a reserved resource and decodes SCI of UEC, and the obtained reserved resources of UEB and UEC have resource overlap. When UEB performs data transmission, a resource collision may occur when the overlapped time-frequency resource is used. In the related art, UEA may detect that the reserved resources in the respective SCIs of UEB and UEC overlap, that is, it may determine an impending resource collision on the reserved resource for data transmission by UEB.

To perform the resource allocation enhancement, it is necessary to reduce the potential collision occurrence probability. Embodiments of the disclosure provide a communication method. In an event that an impending resource collision on a reserved resource for data transmission by the UE is determined, a potential collision indication is sent to the UE. The potential collision indication is configured to indicate whether there is the impending resource collision on the reserved resource for data transmission by the UE. The indication of whether there is the impending resource collision on the reserved resource for data transmission is realized. The UE selects a resource according to the potential collision indication, which reduces the probability of selecting the resource that has the impending resource collision and reduces the potential collision occurrence probability.

In an implementation, when UEA providing the assistant resource set in the above example detects that the reserved resources in the respective SCIs of UEB and UEC overlap, that is, when the impending resource collision on the reserved resource for data transmission by UEB is determined, UEA sends the potential collision indication to UEB. The potential collision indication is configured to indicate whether there is the impending resource collision on the reserved resource for data transmission by UEB. After receiving the potential collision indication, UEB performs resource reselection to reduce the potential collision occurrence probability.

In the embodiments of the disclosure, for convenience of description, the UE that provides the assistant resource set is referred to as the first UE and the UE that uses the assistant resource set assistance mechanism for resource selection is referred to as the second UE.

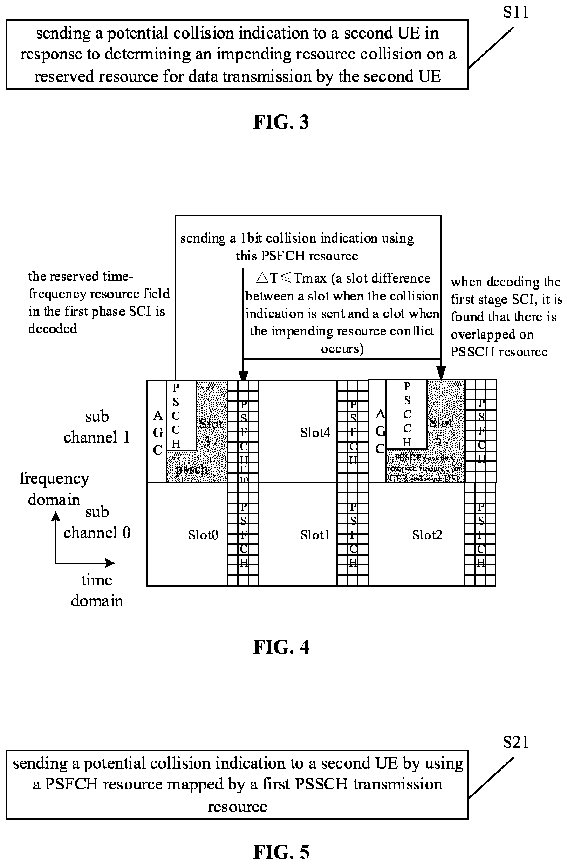

FIG. 3 is a flow chart of a communication method according to some embodiments. As illustrated in FIG. 3, the communication method is applicable to the first UE and includes the following step.

In step S11, a potential collision indication is sent to a second UE in response to determining an impending resource collision on a reserved resource for data transmission by the second UE.

The potential collision indication is configured to indicate the impending resource collision on the reserved resource for data transmission by the second UE.

In some embodiments of the disclosure, the first UE determines whether there is the impending resource collision on the reserved resource for data transmission by the second UE, by detecting whether reserved resources in the respective SCIs of the second UE and the other UE overlap in the time domain and/or frequency domain. If the reserved resources in the respective SCIs of the second UE and the other UE overlap in the time domain and/or frequency domain, the impending resource collision on the reserved resource for data transmission by the second UE is determined.

In the communication method provided in the embodiments of the disclosure, when the impending resource collision on the reserved resource for data transmission by the second UE is determined, the potential collision indication is sent to the second UE, so as to realize the indication whether there is the impending resource collision on the reserved resource for data transmission.

In an implementation of the communication method provided in the embodiments of the disclosure, the potential collision indication is sent to the second UE by using a physical sidelink feedback channel (PSFCH) resource mapped by a current physical sidelink shared channel (PSSCH) transmission resource of the second UE. The current PSSCH transmission resource of the second UE may be understood as a corresponding PSSCH transmission resource on a slot located by a physical sidelink control channel (PSCCH) for indicating a reserved time-frequency resource for a next PSSCH transmission of the second UE.

In the embodiments of the disclosure, for convenience of description, the current PSSCH of the second UE is referred to as the first PSSCH. The PSCCH for indicating the reserved time-frequency resource for the next PSSCH transmission is referred to as the first PSCCH.

FIG. 4 is a schematic diagram illustrating a PSFCH resource for transmitting a potential collision indication according to some embodiments of the disclosure. Referring to FIG. 4, the PSCCH in Slot3 may be understood as the first PSCCH. The first PSCCH is configured to indicate a time-frequency resource for a next PSSCH (the PSSCH in Slot5) transmission. The PSSCH corresponding to the slot where the first PSCCH is located in Slot3 may be understood as the first PSSCH. The PSFCH resource mapped by the first PSSCH transmission resource may be understood as the PSFCH in Slot3.

FIG. 5 is a flow chart of a communication method according to some embodiments. As illustrated in FIG. 5, the communication method is applicable to the first UE and includes the following step.

In step S21, a potential collision indication is sent to a second UE by using a PSFCH resource mapped by a first PSSCH transmission resource.

The first PSSCH is a PSSCH on a slot where the first PSCCH is located and the first PSCCH is a PSCCH for indicating a reserved time-frequency resource for a next PSSCH transmission.

The following describes the process of determining the PSFCH resource mapped by the first PSSCH transmission resource by taking the first UE as UEA and the second UE as UEB.

In an example, it is assumed that UEA is an assistant UE and a receiving UE of UEB and one PSSCH resource is reserved for one PSCCH. The mapping rule between PSSCH transmission resources and PSFCH transmission resources may be: in a resource pool, slots available for the PSFCH are indicated by a high-layer signaling parameter (e.g., period PSFCH resource parameter), such as in the high-layer signaling parameter, the PSFCH is configured to be sent every several slots. A min time gap between the PSSCH and the PSFCH is specified in the high layer signaling parameter.

In the embodiments of the disclosure, according to the mapping rule between PSSCH transmission resources and PSFCH transmission resources, a PSFCH candidate resource mapped by the first PSSCH transmission resource may be determined and the PSFCH candidate resource may be used as the PSFCH candidate resource for sending the potential collision indication. The PSFCH transmission resource for sending the potential collision indication is determined by formula 1.

$$\mathrm{PSFCHindex} = (P_{\mathrm{ID}} + M_{\mathrm{ID}}) mod R_{\mathrm{PRB, CS}}^{\mathrm{PSFCH}} \quad \text{formula 1}$$

$P_{\mathrm{ID}}$ is a physical layer resource identifier provided by the second-stage SCI-A or the second-stage SCI-B. $M_{\mathrm{ID}}$ is 0 in case of unicast. When the service type is 01 for multicast HARQ-NACK feedback mechanism, $M_{\mathrm{ID}}$ is 0. When the service type is 01 for multicast HARQ-NACK\ACK feedback, $M_{\mathrm{ID}}$ is a value of a multicast member ID of a receiver. $R_{\mathrm{PRB, CS}}^{\mathrm{PSFCH}}$ represents a number of cyclic shifts of ACK/NACK feedback that can be carried in all physical resource blocks (PRBs) in the PSFCH candidate resource.

In an implementation of the embodiments of the disclosure, referring to FIG. 4 continually, by decoding the first stage SCI (the first PSCCH in Slot3), the first UE decodes to obtain time resource assignment and frequency resource assignment and determines a PSSCH data transmission resource in SlotS. Therefore, based on the PSFCH resource in Slot3, the first UE sends the potential collision indication to the second UE to indicate the impending resource collision on the PSSCH data transmission of the second UE in Slot5.

In the communication method provided in the embodiments of the disclosure, a time interval ΔT between a moment when the potential collision indication is sent to the second UE and a moment when the impending resource collision occurs to the second UE, is less than or equal to a time interval threshold Tmax, so that the second UE receives the potential collision indication to perform resource selection before the moment when the impending resource collision occurs to the second UE.

In an implementation, the time interval threshold may be indicated by a radio resource control (RRC) signaling. The first UE determines the time interval threshold Tmax according to the RRC signaling. For example, in FIG. 4, UEA uses the PSFCH resource corresponding to the current PSSCH resource of UEB to transmit a 1-bit potential collision indication, and the maximum time interval Tmax between the moment when the potential collision indication is sent and the moment when the potential collision occurs, is specified by the RRC signal. ΔT (a slot difference between a slot when the potential collision indication is sent and a slot when the potential collision occurs)≤Tmax. FIG. 4 may also be understood as a design in which the Min time gap potential collision of the potential collision indication sent using the PSFCH resource is 0 slot.

In the related art, the PSFCH resource is used for transmitting a 1-bit hybrid automatic repeat request (HARQ) feedback. Therefore, in the embodiments of the disclosure, the PSFCH resource used for transmitting the potential collision indication may be understood as the PSFCH resource for transmitting the HARQ feedback.

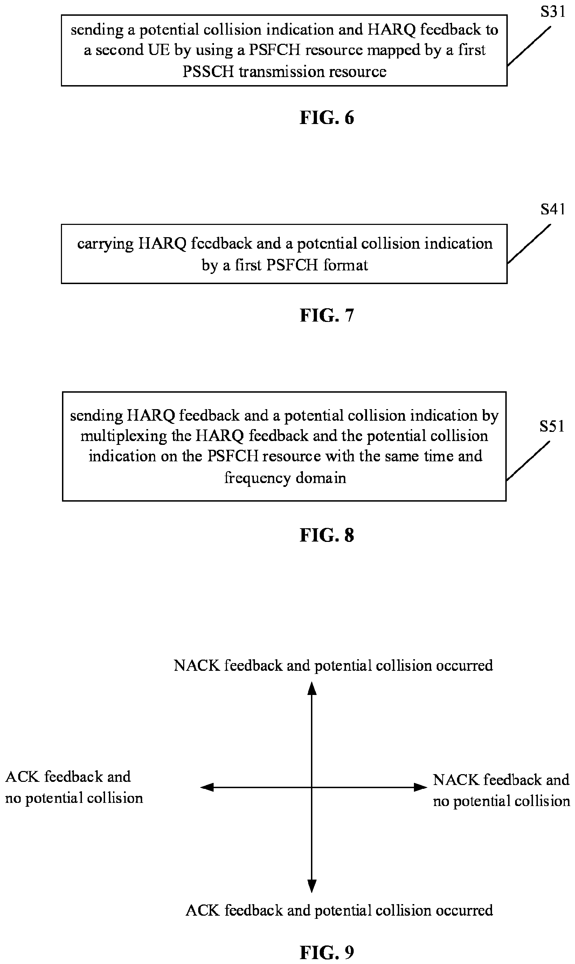

FIG. 6 is a flow chart of a communication method according to some embodiments. As illustrated in FIG. 6, the communication method is applicable to the first UE and includes the following step.

In step S31, HARQ feedback and a potential collision indication are sent to a second UE by using a PSFCH resource mapped by a first PSSCH transmission resource.

In some embodiments of the disclosure, the HARQ feedback that is sent to the second UE by using the PSFCH resource mapped by the first PSSCH transmission resource may be the 1-bit HARQ feedback.

In some embodiments of the disclosure, the potential collision indication that is sent to the second UE by using the PSFCH resource mapped by the first PSSCH transmission resource may be the 1-bit potential collision indication.

The PSFCH used to carry the HARQ feedback and the potential collision indication in the embodiments of the disclosure may be understood as a new PSFCH format. In the embodiments of the disclosure, the new PSFCH format is referred to as a first PSFCH format.

FIG. 7 is a flow chart of a communication method according to some embodiments. As illustrated in FIG. 7, the communication method is applicable to the first UE and includes the following step.

In step S41, HARQ feedback and a potential collision indication are carried by a first PSFCH format.

In the embodiments of the disclosure, the HARQ feedback and the potential collision indication are sent by the PSFCH resource in the first PSFCH format.

In the embodiments of the disclosure, the potential collision indication and the HARQ feedback may multiplex the same PSFCH resource or may not multiplex the PSFCH resource.

In an implementation, in the communication method provided in the embodiments of the disclosure, the potential collision indication and the HARQ feedback may multiplex the PSFCH resource with the same time and frequency domain.

FIG. 8 is a flow chart of a communication method according to some embodiments. As illustrated in FIG. 8, the communication method is applicable to the first UE and includes the following step.

In step S51, HARQ feedback and a potential collision indication are sent by multiplexing the HARQ feedback and the potential collision indication on the PSFCH resource with the same time and frequency domain.

In some embodiments of the disclosure, the potential collision indication may be the 1-bit potential collision indication and the HARQ feedback may be the 1-bit HARQ feedback.

The embodiments of the disclosure may design a new 2-bit PSFCH format to transmit the HARQ feedback and the potential collision indication at the same time. That is, the newly designed 2-bit PSFCH format is used to carry the 1-bit ACK/NACK feedback and the 1-bit potential collision indication.

In the embodiments of the disclosure, in order to distinguish the HARQ feedback and the potential collision indication, a cyclic shift may be designed to distinguish the HARQ feedback and the potential collision indication. That is, the existing 2-bit HARQ feedback mechanism is reused.

In some embodiments, a base sequence is sent by using the PSFCH resource with the same time and frequency domain and the base sequence is cyclically shifted to indicate the HARQ feedback and potential collision indication. In an example, the PSFCH resource with the same time and frequency domain is used in the embodiments of the disclosure to transmit a base sequence with a length of 12 and the base sequence may carry the transmitted information after being cyclically shifted. For example, the sequence is mapped on a single physical resource block (PRB) and a single orthogonal frequency division multiplexing (OFDM) symbol, that is, the 1-bit potential collision indication and the 1-bit HARQ feedback. FIG. 9 is a schematic diagram of distinguishing HARQ feedback and a potential collision indication by cycle shifting according to some embodiments of the disclosure. As illustrated in FIG. 9, there are 4 cycle shifts when the rotation is performed in units of $\pi/2$. The phase is 0, which means (N, +collision) and means NACK feedback and potential collision occurred. The phase is $\pi/2$, which means (N, -collision) and means NACK feedback and no potential collision. The phase is $\pi$, which means (ACK, +collision) and means ACK feedback and potential collision occurred. The phase is $3\pi/2$, which means (ACK, - collision) and means ACK feedback and no potential collision.

In another implementation, in the communication method provided in the embodiments of the disclosure, the potential collision indication and the HARQ feedback may not multiplex the PSFCH resource.

The potential collision indication and the HARQ feedback may use the PSFCH resource in a frequency division multiplexing (FDM) manner. For example, the HARQ feedback and the potential collision indication are sent on different frequency domain resources.

For convenience of description in the embodiments of the disclosure, the frequency domain for sending the HARQ feedback is called the first frequency domain and the frequency domain for sending the potential collision indication is called the second frequency domain.

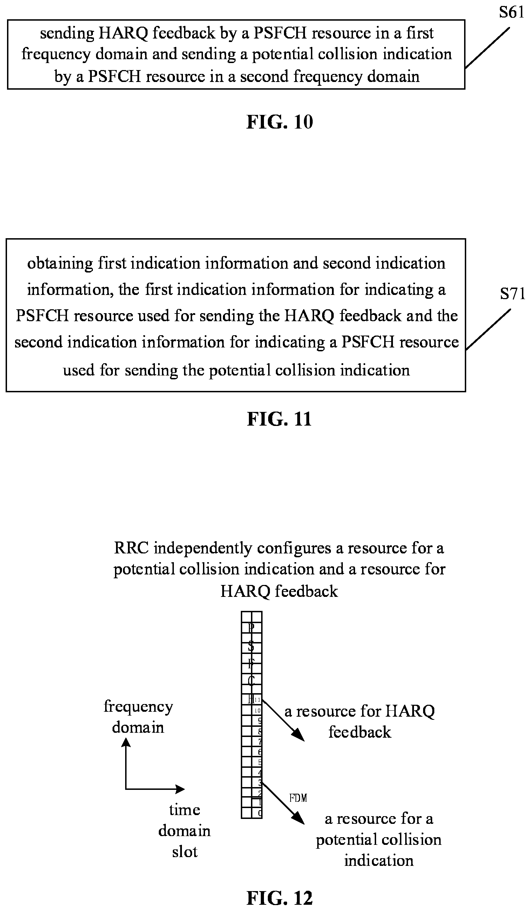

FIG. 10 is a flow chart of a communication method according to some embodiments. As illustrated in FIG. 10, the communication method is applicable to the first UE and includes the following step.

In step S61, HARQ feedback is sent by a PSFCH resource in a first frequency domain and a potential collision indication is sent by a PSFCH resource in a second frequency domain.

In the communication method provided in the embodiments of the disclosure, different frequency domain resources may be configured for the potential collision indication and the HARQ feedback respectively.

FIG. 11 is a flow chart of a communication method according to some embodiments. As illustrated in FIG. 11, the communication method is applicable to the first UE and includes the following step.

In step S71, first indication information and second indication information are obtained.

The first indication information is used for indicating a PSFCH resource used for sending the HARQ feedback and the second indication information is used for indicating a PSFCH resource used for sending the potential collision indication.

In an implementation, two parameter values may be introduced in the embodiments of the disclosure to indicate the PSFCH resource used for sending the HARQ feedback and the PSFCH resource used for sending the potential collision indication.

In an example, the parameter value sl-PSFCH-HARQ-RB-Set-r16 is introduced to represent the resource for the HARQ feedback and the parameter value sl-PSFCH-precollsion-RB-Set-r16 is introduced to represent the resource for the potential collision indication.

In the communication method provided in the embodiment of the disclosure, different frequency domain resources may be configured for the potential collision indication and the HARQ feedback respectively by RRC. For example, the parameter value sl-PSFCH-HARQ-RB-Set-r16 for indicating the resource for the HARQ feedback may be introduced in the RRC signaling and the parameter value sl-PSFCH-precollsion-RB-Set-r16 for indicating the resource for the potential collision indication may be introduced in the RRC signaling.

It may be understood that, in the communication protocol of R16, frequency domain resources used for PSFCH transmission among the candidate resources of the PSFCH are pre-configured by RRC and are realized in the frequency domain by the PRB set indicated by a bitmap. In one way, the higher layer parameter sl-PSFCH-RB-Set-r16 BIT STRING (SIZE (10..275)) is used, which indicates a bitmap with a length of 10 to 275. In the communication method provided in the embodiment of the disclosure, by introducing the following two parameter values, it is ensured that the mapping criteria from PSSCH to potential collision indication and HARQ feedback resources are the same.

Two parameter values:

sl-PSFCH-HARQ-RB-Set-r16 BIT STRING (SIZE (10275))
sl-PSFCH-precollsion-RB-Set-r16 BIT STRING (SIZE (10...275)).

In the communication method provided in the embodiment of the disclosure, the PSFCH resource in the second frequency domain and the PSFCH resource in the second frequency domain have the same time domain resource.

FIG. 12 is a schematic diagram illustrating an independent configuration of a resource for a potential collision indication and a resource for HARQ feedback by an RRC signaling, according to some embodiments. Referring to FIG. 12, a PRB with a sequence number 3 on the PSFCH resource is used to indicate the resource for transmitting the HARQ feedback and a PRB with a sequence number 11 on the PSFCH resource is used to indicate the resource for transmitting the potential collision indication.

In the communication method provided in the embodiment of the disclosure, the HARQ feedback and the potential collision indication may be sent in different time domains.

For convenience of description in the embodiments of the disclosure, the moment for sending the HARQ feedback is referred to as the first moment and the moment for sending the potential collision indication is referred to as the second moment.

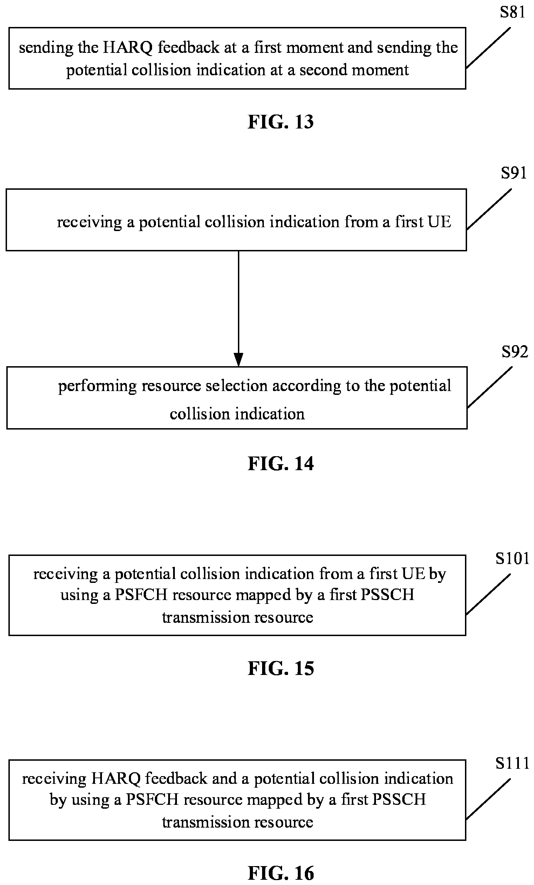

FIG. 13 is a flow chart of a communication method according to some embodiments. As illustrated in FIG. 13, the communication method is applicable to the first UE and includes the following step.

In step S81, HARQ feedback is sent at a first moment and a potential collision indication is sent at a second moment. The second moment is earlier than the first moment.

In the communication method provided in the embodiment of the disclosure, the PSFCH resource is not multiplexed, the HARQ is fed back at moment T1, the potential collision indication is fed back at moment T2, and T2<T1.

In some embodiments, a frequency domain resource of the HARQ feedback sent at the first moment and the frequency domain resource of the HARQ feedback sent at the second moment may also be different.

In the communication method provided in the embodiment of the disclosure, different frequency domain resources may be configured for the potential collision indication and the HARQ feedback respectively.

In one manner, the first UE may obtain the first indication information and the second indication information. The first indication information is used to indicate the PSFCH resource used for sending the HARQ feedback and the second indication information is used to indicate the PSFCH resource used for sending the potential collision indication.

In an implementation, two parameter values may be introduced in the embodiments of the disclosure to indicate the PSFCH resource used for sending the HARQ feedback and the PSFCH resource used for sending the potential collision indication.

In an example, the parameter value sl-PSFCH-HARQ-RB-Set-r16 is introduced to indicate the resource for the HARQ feedback and the parameter value sl-PSFCH-precollsion-RB-Set-r16 is introduced to indicate the resources for the potential collision indication.

In the communication method provided in the embodiment of the disclosure, different frequency domain resources may be configured for the potential collision indication and the HARQ feedback respectively by RRC. For example, the parameter value sl-PSFCH-HARQ-RB-Set-r16 for indicating the resource for the HARQ feedback may be introduced in the RRC signaling and the parameter value sl-PSFCH-precollsion-RB-Set-r16 for indicating the resource for the potential collision indication may be introduced in the RRC signaling.

In the embodiments of the disclosure, the PSSCH needs to be decoded and a cyclic redundancy check (CRC) needs to be completed until the data is decoded correctly before the HARQ feedback is sent. However, to detect whether the potential collision occurs, it may be determined by decoding the first-stage SCI. Thus the moment when the potential collision indication is detected is earlier than the moment when the data decoding is completed. Therefore, the moment for sending the potential collision indication is set to be earlier than the moment for sending the HARQ feedback. Furthermore, in the communication method provided in the embodiment of the disclosure, the HARQ and the potential collision indication are respectively fed back at different moments, which may improve the communication efficiency.

In the communication method provided in the embodiment of the disclosure, when the first LTE determines the impending resource collision on the reserved resource for data transmission, it sends the potential collision indication to the second UE, so as to realize the indication whether there is the impending resource collision on the reserved resource for data transmission.

In some embodiments of the disclosure, the first LTE sends the potential collision indication to the second UE. The second UE receives the potential collision indication sent by the first UE and may perform resource reselection according to the potential collision indication to reduce the collision probability.

FIG. 14 is a flow chart of a communication method according to some embodiments. As illustrated in FIG. 14, the communication method is applicable to the second UE and includes the following steps.

In step S91, a potential collision indication is received from a first UE.

The potential collision indication is configured to indicate an impending resource collision on a reserved resource for data transmission by the second UE.

In step S92, resource selection is performed according to the potential collision indication.

In the embodiments of the disclosure, the second LTE receives the potential collision indication, and based on the received potential collision indication, performs resource reselection to avoid the occurrence of the potential collision.

For example, a resource selected by the second UE for resource reselection may be different from the reserved resource of the imminent resource collision.

FIG. 15 is a flow chart of a communication method according to some embodiments. As illustrated in FIG. 15, the communication method is applicable to the second UE and includes the following step.

In step S101, a potential collision indication is received from a first UE by using a PSFCH resource mapped by a first PSSCH transmission resource.

The first PSSCH is a PSSCH on a slot where a first PSCCH is located and the first PSCCH is a PSCCH for indicating a reserved time-frequency resource for a next PSSCH transmission.

In the communication method provided in the embodiments of the disclosure, a time interval ΔT between a moment when the potential collision indication is sent to the second UE and a moment when the impending resource collision occurs to the second UE, is less than or equal to a time interval threshold Tmax, so that the second UE receives the potential collision indication to perform resource selection before the moment when the impending resource collision occurs to the second UE.

FIG. 16 is a flow chart of a communication method according to some embodiments. As illustrated in FIG. 16, the communication method is applicable to the second UE and includes the following step.

In step 5111, HARQ feedback and a potential collision indication are received by using a PSFCH resource mapped by a first PSSCH transmission resource.

In the embodiments of the disclosure, the HARQ feedback received by using the PSFCH resource mapped by the first PSSCH transmission resource may be the 1-bit HARQ feedback.

In the embodiments of the disclosure, the potential collision indication received by using the PSFCH resource mapped by the first PSSCH transmission resource may be the 1-bit potential collision indication.

The PSFCH resource used for receiving the HARQ feedback and the potential collision indication in the embodiments of the disclosure may be understood as a new PSFCH resource. In the embodiments of the disclosure, the PSFCH format corresponding to the new PSFCH resource is referred to as the first PSFCH format.

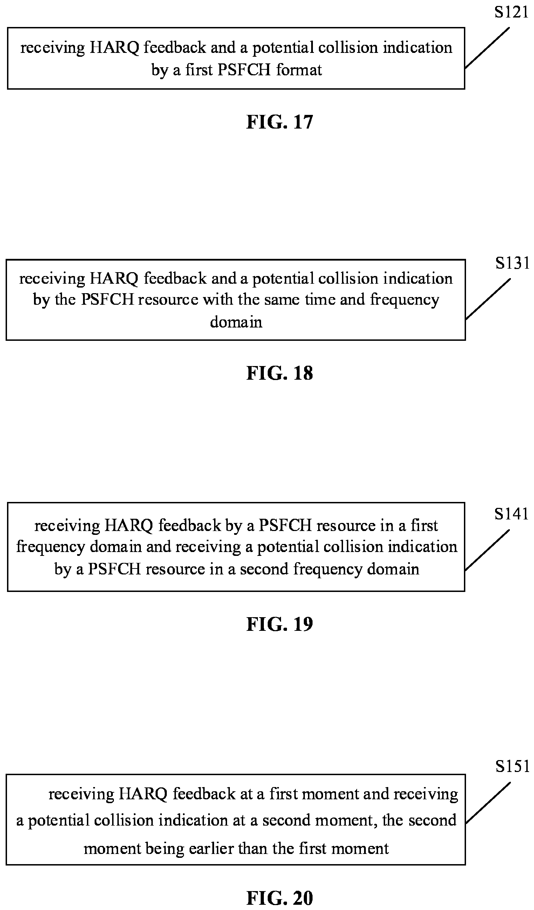

FIG. 17 is a flow chart of a communication method according to some embodiments. As illustrated in FIG. 17, the communication method is applicable to the second UE and includes the following step.

In step S121, HARQ feedback and a potential collision indication are received by a first PSFCH format.

In the embodiments of the disclosure, the potential collision indication and the HARQ feedback may multiplex the same PSFCH resource or may not multiplex the PSFCH resource.

In an implementation, in the communication method provided in the embodiments of the disclosure, the potential collision indication and the HARQ feedback may multiplex the PSFCH resource with the same time and frequency domain.

FIG. 18 is a flow chart of a communication method according to some embodiments. As illustrated in FIG. 18, the communication method is applicable to the second UE and includes the following step.

In step S131, HARQ feedback and a potential collision indication are received by the PSFCH resource with the same time and frequency domain.

In some embodiments, a base sequence is received by using the PSFCH resource with the same time and frequency domain and the HARQ feedback and the potential collision indication are determined based on the cyclically shifted base sequence.

In another implementation, in the communication method provided in the embodiment of the disclosure, the potential collision indication and the HARQ feedback may not multiplex the PSFCH resource.

The potential collision indication and HARQ feedback may use the PSFCH resource in an FDM manner. For example, the HARQ feedback and the potential collision indications are received on different frequency domains.

FIG. 19 is a flow chart of a communication method according to some embodiments. As illustrated in FIG. 19, the communication method is applicable to the second UE and includes the following step.

In step S141, HARQ feedback is received by a PSFCH resource in a first frequency domain and a potential collision indication is received by a PSFCH resource in a second frequency domain.

In the communication method provided in the embodiment of the disclosure, different frequency domain resources may be configured for the potential collision indication and the HARQ feedback respectively.

In an implementation, the second LTE obtains first indication information and second indication information.

The first indication information is used to indicate a PSFCH resource used for sending the HARQ feedback and the second indication information is used to indicate a PSFCH resource used for sending the potential collision indication.

In an implementation, two parameter values may be introduced in the embodiments of the disclosure to indicate the PSFCH resource used for sending the HARQ feedback and the PSFCH resource used for sending the potential collision indication.

In an example, the parameter value sl-PSFCH-HARQ-RB-Set-r16 is introduced to represent the resource for the HARQ feedback and the parameter value sl-PSFCH-precollsion-RB-Set-r16 is introduced to represent the resource for the potential collision indication.

In the communication method provided in the embodiment of the disclosure, different frequency domain resources may be configured for the potential collision indication and the HARQ feedback respectively by RRC. For example, the parameter value sl-PSFCH-HARQ-RB-Set-r16 for indicating the resource for the HARQ feedback may be introduced in the RRC signaling and the parameter value sl-PSFCH-precollsion-RB-Set-r16 for indicating the resource for the potential collision indication may be introduced in the RRC signaling.

It may be understood that, in the communication protocol of R16, frequency domain resources used for PSFCH transmission among the candidate resources of the PSFCH are pre-configured by RRC and are realized in the frequency domain by the PRB set indicated by a bitmap. In one way, the higher layer parameter sl-PSFCH-RB-Set-r16 BIT STRING (SIZE (10..275)) is used, which indicates a bitmap with a length of 10 to 275. In the communication method provided in the embodiment of the disclosure, by introducing the following two parameter values, it is ensured that the mapping criteria from PSSCH to potential collision indication and HARQ feedback resources are the same.

Two parameter values:

sl-PSFCH-HARQ-RB-Set-r16 BIT STRING (SIZE (10275))
sl-PSFCH-precollsion-RB-Set-r16 BIT STRING (SIZE (10...275)).

In the communication method provided in the embodiment of the disclosure, the PSFCH resource in the second frequency domain and the PSFCH resource in the second frequency domain have the same time domain resources. That is, the second UE receives the HARQ feedback and the potential collision indication in the same time domain by means of frequency division multiplexing.

In some embodiment, the PSFCH resource in the second frequency domain and the PSFCH resource in the second frequency domain have different time domain resources.

FIG. 20 is a flow chart of a communication method according to some embodiments. As illustrated in FIG. 20, the communication method is applicable to the second UE and includes the following step.

In step S151, HARQ feedback is received at a first moment and a potential collision indication is received at a second moment, and the second moment is earlier than the first moment.

It can be understood that the technical implementation involved in the process of sending the potential collision indication and/or HARQ feedback by the first UE in the embodiments of the disclosure may be applicable to the process of receiving the potential collision and/or HARQ feedback from the first UE by the second UE to perform resource selection in the embodiments of the disclosure. Therefore, for some technical implementation descriptions of the process of resource selection by the second UE, reference should be made to the relevant description in the implementation process of resource selection by the first UE.

It is understood that the communication method provided in the embodiments of the disclosure is applicable to the process of achieving random access parameter configuration during the interaction between the first UE and the second UE. The interaction between the first UE and the second UE to achieve resource selection process is not detailed in the embodiments.

It needs to be noted that, those skilled in the art may understand that various implementations/embodiments involved in embodiments of the disclosure may be used in combination with the above embodiments or may be used independently. Whether independently used or used in combination with the above embodiments, the implementation principles are similar. In embodiments of the disclosure, part of embodiments is illustrated by the implementation used together; it may be understood by those skilled in the art that the examples are not a limitation of embodiments of the disclosure.

According to a same conception, a communication apparatus is further provided in embodiments of the disclosure.

It may be understood that, the communication apparatus provided in embodiments of the disclosure includes hardware structures and/or software modules that perform various functions in order to achieve the above functions. In combination with modules and algorithm steps of examples described in embodiments of the disclosure, the embodiments of the disclosure may be implemented in a form of hardware or a combination of hardware and computer software. Whether a certain function is executed by the hardware or the computer software driving the hardware depends on specific applications and design constraints of the technical solutions. Those skilled in the art may adopt different methods for each specific application to implement the described functions, but such implementation should not be considered as beyond the scope of the technical solutions in embodiments of the disclosure.

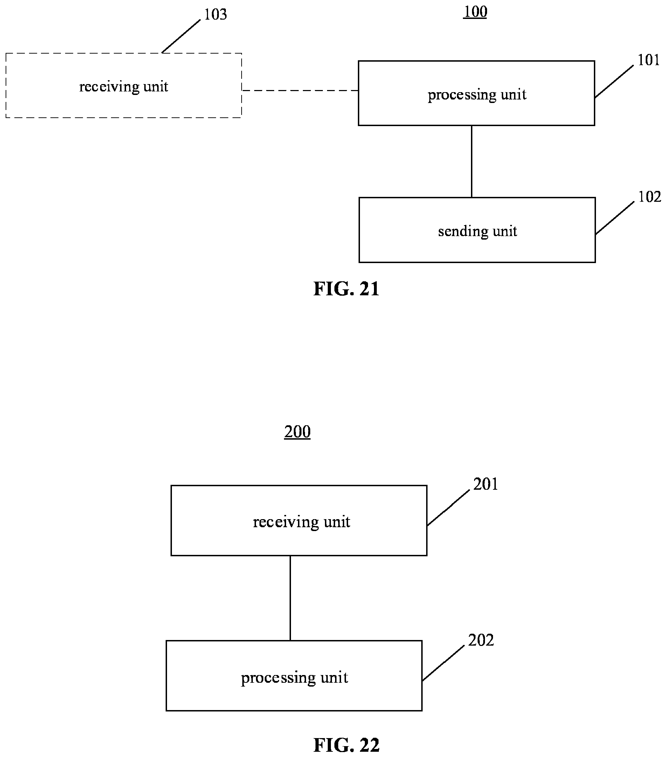

FIG. 21 is a block diagram of a communication apparatus according to some embodiments. Referring to FIG. 21, a communication apparatus 100 is applicable to a first UE. The communication apparatus 100 includes a processing unit 101 and a sending unit 102.

The processing unit 101 is configured to determine an impending resource collision on a reserved resource for data transmission by a second UE. The sending unit 102 is configured to send a potential collision indication to the second UE in response to the processing unit determining the impending resource collision on the reserved resource for data transmission by the second UE, the potential collision indication for indicating the impending resource collision on the reserved resource for data transmission by the second UE.

In an implementation, the sending unit 102 sends the potential collision indication to the second UE by using a PSFCH resource mapped by a first PSSCH transmission resource; in which the first PSSCH is a PSSCH on a slot where a first PSCCH is located and the first PSCCH is a PSCCH for indicating a reserved time-frequency resource for a next PSSCH transmission.

In an implementation, the sending unit 102 is further configured to send HARQ feedback by the PSFCH resource.

In an implementation, the sending unit 102 carries the HARQ feedback and the potential collision indication by a first PSFCH format.

In an implementation, the sending unit 102 sends the HARQ feedback and the potential collision indication by multiplexing the HARQ feedback and the potential collision indication on the PSFCH resource with the same time and frequency domain.

In an implementation, the sending unit 102 sends a base sequence by using the

PSFCH resource with the same time and frequency domain and indicates the HARQ feedback and the potential collision indication by shifting cyclically the base sequence.

In an implementation, the sending unit 102 sends the HARQ feedback by a PSFCH resource in a first frequency domain and sends the potential collision indication by a PSFCH resource in a second frequency domain.

In an implementation, the PSFCH resource in the second frequency domain and the PSFCH resource in the second frequency domain have the same time domain resource.

In an implementation, the sending unit 102 sends the HARQ feedback at a first moment and sends the potential collision indication at a second moment, the second moment being earlier than the first moment.

In an implementation, the communication apparatus 100 further includes a receiving unit 103 configured to obtain first indication information and second indication information, the first indication information for indicating a PSFCH resource used for sending the HARQ feedback and the second indication information for indicating a PSFCH resource used for sending the potential collision indication.

In an implementation, the first indication information and the second indication information are carried in an RRC signaling.

In an implementation, a time interval between a moment when the potential collision indication is sent to the second UE and a moment when the impending resource collision occurs on the second UE is less than or equal to a time interval threshold.

In an implementation, the time interval threshold is determined according to an RRC signaling.

FIG. 22 is a block diagram of a communication apparatus according to some embodiments. Referring to FIG. 22, a communication apparatus 200 is applicable to a second UE. The communication apparatus 200 includes a receiving unit 201 and a processing unit 202.

The receiving unit 201 is configured to receive a potential collision indication from a first UE, the potential collision indication for indicating an impending resource collision on a reserved resource for data transmission by the second UE. The processing unit 202 is configured to perform resource selection according to the potential collision indication.

In an implementation, the receiving unit 201 receives the potential collision indication from the first UE by using a PSFCH resource mapped by a first PSSCH transmission resource; in which the first PSSCH is a PSSCH on a slot where a first PSCCH is located and the first PSCCH is a PSCCH for indicating a reserved time-frequency resource for a next PSSCH transmission.

In an implementation, the receiving unit 201 receives HARQ feedback by the PSFCH resource.

In an implementation, the receiving unit 201 receives the HARQ feedback and the potential collision indication by a first PSFCH format.

In an implementation, the receiving unit 201 receives the HARQ feedback and the potential collision indication by the PSFCH resource with the same time and frequency domain.

In an implementation, the receiving unit 201 receives a base sequence by using the PSFCH resource with the same time and frequency domain and determines the HARQ feedback and the potential collision indication according to the base sequence cyclically shifted.

In an implementation, the receiving unit 201 receives the HARQ feedback by a PSFCH resource in a first frequency domain and receives the potential collision indication by a PSFCH resource in a second frequency domain.

In an implementation, the PSFCH resource in the second frequency domain and the PSFCH resource in the second frequency domain have the same time domain resource.

In an implementation, the receiving unit 201 receives the HARQ feedback at a first moment and receive the potential collision indication at a second moment, the second moment being earlier than the first moment.

In an implementation, the receiving unit 201 obtains first indication information and second indication information, the first indication information for indicating a PSFCH resource used for receiving the HARQ feedback and the second indication information for indicating a PSFCH resource used for receiving the potential collision indication.

In an implementation, the first indication information and the second indication information are carried in an RRC signaling.

In an implementation, a time interval between a moment when the potential collision indication is received and a moment when the impending resource collision occurs on the second UE is less than or equal to a time interval threshold.

In an implementation, the time interval threshold is determined according to an RRC signaling.

With respect to the apparatuses in the above embodiments, the specific manners for performing operations for individual modules therein have been described in detail in the embodiments regarding the methods, which will not be elaborated herein.

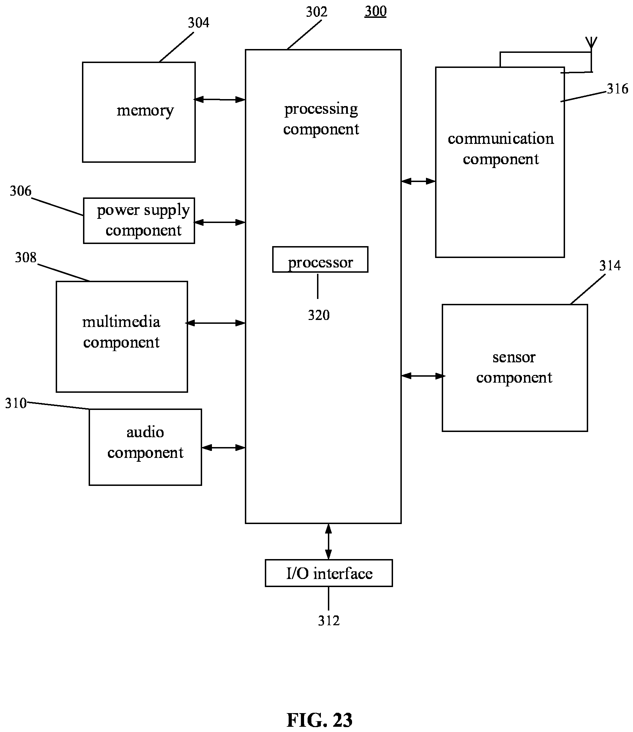

FIG. 23 is a block diagram illustrating a device 300 for communication according to some embodiments. For example, the device 300 may be the first UE or the second UE in the above embodiments, such as a mobile phone, a computer, a digital broadcasting terminal, a messaging device, a game console, a tablet device, a medical device, a fitness equipment, a personal digital assistant, etc.

As illustrated in FIG. 23, the device 300 may include one or more components: a processing component 302, a memory 304, a power supply component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 320 to execute instructions to perform all or part of the steps in the above described methods. Moreover, the processing component 302 may include one or more modules which facilitate the interaction between the processing component 302 and other components. For instance, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power supply component 306 may provide power to various components of the device 300. The power supply component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front camera and/or a rear camera. The front camera and the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone ("MIC") configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide status assessments of various aspects of the device 300. For instance, the sensor component 314 may detect an open/closed status of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may also include a light sensor, such as a CMOS or CCD image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 can access a wireless network based on a communication standard, such as WiFi, second generation (2G), or third generation (3G), or a combination thereof. In one exemplary embodiment, the communication component 316 receives a broadcast signal or broadcast associated information from an external broadcast management system via a broadcast channel. In one exemplary embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the device 300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer readable storage medium including instructions, such as included in the memory 304, executable by the processor 320 in the device 300, for performing the above-described methods. For example, the non-transitory computer-readable storage medium may be a ROM, a RAM, a CD-ROM, a magnetic tape, a floppy disc, an optical data storage device, and the like.

It may be further understood that, "a plurality of" or "multiple" in the disclosure means two or above, which is similar to other quantifiers. The term may describe association relationships of associated objects, indicating that there may be three types of relationships, for example, A and/or B, which may mean: A exists alone, A and B exist at the same time, and B exists alone. The character "/" generally indicates that the associated objects before and after are in an "or" relationship. The singular forms "a", "the" and "said are also intended to include plural forms, unless the context clearly indicates otherwise.

It should be further understood that, although the terms "first", "second", etc. may be configured to describe various information, such information shall not be limited to these terms. These terms are only used to distinguish the same type of information, rather than indicate a particular order or importance degree. In fact, "first", "second" and other similar descriptions may be used interchangeably. For example, subject to the scope of this disclosure, first information may also be referred to as second information, and similarly, and second information may also be referred to as first information.

It may be further understood that, even though operations are described in the drawings in a particular order, it should not be understood as requiring that such operations be performed in the particular order shown or in sequential order, or that all illustrated operations be performed to obtain desirable results. In certain circumstances, multitasking and parallel processing may be advantageous.

Other embodiments of the disclosure will be apparent to those skilled in the art from consideration of the specification and practice of the disclosure disclosed here. This application is intended to cover any variations, uses, or adaptations of the invention following the general principles thereof and including such departures from the disclosure as come within known or customary practice in the art. It is intended that the specification and examples be considered as exemplary only, with a true scope and spirit of the disclosure being indicated by the following claims.

It should be understood that the disclosure is not limited to the precise structures described above and shown in the drawings, and various modifications and changes may be made without departing from its scope. The scope of the disclosure is only limited by the appended claims. The scope of the disclosure is only limited by the appended claims.

**Claims**

1. A communication method, applicable to a first user equipment (UE), the method comprising:
   sending a potential collision indication to a second UE in response to determining an impending resource collision on a reserved resource for data transmission by the second UE, the potential collision indication for indicating the impending resource collision on the reserved resource for data transmission by the second UE.

2. The method of claim 1, wherein sending the potential collision indication to the second UE comprises:

   sending the potential collision indication to the second UE by using a physical sidelink feedback channel (PSFCH) resource mapped by a first physical sidelink shared channel (PSSCH) transmission resource;
   wherein the first PSSCH is a PSSCH on a slot where a first physical sidelink control channel (PSCCH) is located and the first PSCCH is a PSCCH for indicating a reserved time-frequency resource for a next PSSCH transmission.

**3.** The method of claim 2, further comprising:
sending hybrid automatic repeat request (HARQ) feedback by the PSFCH resource.

**4.** The method of claim 3, wherein the HARQ feedback and the potential collision indication are sent in the following manner:
carrying the HARQ feedback and the potential collision indication by a first PSFCH format.

**5.** The method of claim 4, wherein sending the HARQ feedback and the potential collision indication comprises:
sending the HARQ feedback and the potential collision indication by multiplexing the HARQ feedback and the potential collision indication on the PSFCH resource with the same time and frequency domain.

**6.** The method of claim 5, wherein sending the HARQ feedback and the potential collision indication by multiplexing the HARQ feedback and the potential collision indication on the PSFCH resource with the same time and frequency domain comprises:
sending a base sequence by using the PSFCH resource with the same time and frequency domain and indicating the HARQ feedback and the potential collision indication by shifting cyclically the base sequence.

**7.** The method of claim 4, wherein sending the HARQ feedback and the potential collision indication comprises:
sending the HARQ feedback by a PSFCH resource in a first frequency domain and sending the potential collision indication by a PSFCH resource in a second frequency domain.

**8.** The method of claim 7, wherein the PSFCH resource in the second frequency domain and the PSFCH resource in the second frequency domain have the same time domain resource.

**9.** The method of claim 4 or 7, wherein sending the HARQ feedback and the potential collision indication comprises:
sending the HARQ feedback at a first moment and sending the potential collision indication at a second moment, the second moment being earlier than the first moment.

**10.** The method of any one of claims 7 to 9, further comprising:
obtaining first indication information and second indication information, the first indication information for indicating a PSFCH resource used for sending the HARQ feedback and the second indication information for indicating a PSFCH resource used for sending the potential collision indication.

**11.** The method of claim 10, wherein the first indication information and the second indication information are carried in a radio resource control (RRC) signaling.

**12.** The method of claim 1, wherein a time interval between a moment when the potential collision indication is sent to the second UE and a moment when the impending resource collision occurs on the second UE is less than or equal to a time interval threshold.

**13.** The method of claim 12, wherein the time interval threshold is determined according to an RRC signaling.

**14.** A communication method, applicable to a second UE, the method comprising:

receiving a potential collision indication from a first UE, the potential collision indication for indicating an impending resource collision on a reserved resource for data transmission by the second UE; and
performing resource selection according to the potential collision indication.

**15.** The method of claim 14, wherein receiving the potential collision indication from the first UE comprises:

receiving the potential collision indication from the first UE by using a PSFCH resource mapped by a first PSSCH transmission resource;
wherein the first PSSCH is a PSSCH on a slot where a first PSCCH is located and the first PSCCH is a PSCCH for indicating a reserved time-frequency resource for a next PSSCH transmission.

**16.** The method of claim 15, further comprising:
receiving HARQ feedback by the PSFCH resource.

17. The method of claim 16, wherein the HARQ feedback and the potential collision indication are received in the following manner:
receiving the HARQ feedback and the potential collision indication by a first PSFCH format.

18. The method of claim 17, wherein receiving the HARQ feedback and the potential collision indication comprises:
receiving the HARQ feedback and the potential collision indication by the PSFCH resource with the same time and frequency domain.

19. The method of claim 18, wherein a base sequence is received by using the PSFCH resource with the same time and frequency domain and the HARQ feedback and the potential collision indication are determined according to the base sequence cyclically shifted.

20. The method of claim 17, wherein receiving the HARQ feedback and the potential collision indication comprises:
receiving the HARQ feedback by a PSFCH resource in a first frequency domain and receiving the potential collision indication by a PSFCH resource in a second frequency domain.

21. The method of claim 20, wherein the PSFCH resource in the second frequency domain and the PSFCH resource in the second frequency domain have the same time domain resource.

22. The method of claim 17 or 20, wherein receiving the HARQ feedback and the potential collision indication comprises:
receiving the HARQ feedback at a first moment and receiving the potential collision indication at a second moment, the second moment being earlier than the first moment.

23. The method of any one of claims 17 to 22, further comprising:
obtaining first indication information and second indication information, the first indication information for indicating a PSFCH resource used for receiving the HARQ feedback and the second indication information for indicating a PSFCH resource used for receiving the potential collision indication.

24. The method of claim 23, wherein the first indication information and the second indication information are carried in an RRC signaling.

25. The method of claim 14, wherein a time interval between a moment when the potential collision indication is received and a moment when the impending resource collision occurs on the second UE is less than or equal to a time interval threshold.

26. The method of claim 25, wherein the time interval threshold is determined according to an RRC signaling.

27. A communication apparatus, applicable to a first UE, the apparatus comprising:

a processing unit, configured to determine an impending resource collision on a reserved resource for data transmission by a second UE; and
a sending unit, configured to send a potential collision indication to the second UE in response to the processing unit determining the impending resource collision on the reserved resource for data transmission by the second UE, the potential collision indication for indicating the impending resource collision on the reserved resource for data transmission by the second UE.

28. The apparatus of claim 27, wherein the sending unit is configured to send the potential collision indication to the second UE in the following manner:

sending the potential collision indication to the second UE by using a PSFCH resource mapped by a first PSSCH transmission resource;
wherein the first PSSCH is a PSSCH on a slot where a first PSCCH is located and the first PSCCH is a PSCCH for indicating a reserved time-frequency resource for a next PSSCH transmission.

29. The apparatus of claim 28, wherein the sending unit is further configured to:
send HARQ feedback by the PSFCH resource.

30. The apparatus of claim 29, wherein the sending unit is configured to carry the HARQ feedback and the potential collision indication by a first PSFCH format.

31. The apparatus of claim 30, wherein the sending unit is configured to send the HARQ feedback and the potential collision indication by multiplexing the HARQ feedback and the potential collision indication on the PSFCH resource with the same time and frequency domain.

32. The apparatus of claim 31, wherein the sending unit is configured to send a base sequence by using the PSFCH resource with the same time and frequency domain and indicate the HARQ feedback and the potential collision indication by shifting cyclically the base sequence.

33. The apparatus of claim 30, wherein the sending unit is configured to send the HARQ feedback by a PSFCH resource in a first frequency domain and send the potential collision indication by a PSFCH resource in a second frequency domain.

34. The apparatus of claim 30, wherein the sending unit is configured to send the HARQ feedback at a first moment and sending the potential collision indication at a second moment, the second moment being earlier than the first moment.

35. A communication apparatus, applicable to a second UE, the apparatus comprising:

a receiving unit, configured to receive a potential collision indication from a first UE, the potential collision indication for indicating an impending resource collision on a reserved resource for data transmission by the second UE; and
a processing unit, configured to perform resource selection according to the potential collision indication.

36. The apparatus of claim 35, wherein the receiving unit is configured to receive the potential collision indication from the first UE by using a PSFCH resource mapped by a first PSSCH transmission resource;
wherein the first PSSCH is a PSSCH on a slot where a first PSCCH is located and the first PSCCH is a PSCCH for indicating a reserved time-frequency resource for a next PSSCH transmission.

37. The apparatus of claim 36, wherein the receiving unit is configured to receive HARQ feedback by the PSFCH resource.

38. The apparatus of claim 37, wherein the receiving unit is configured to receive the HARQ feedback and the potential collision indication by a first PSFCH format.

39. The apparatus of claim 38, wherein the receiving unit is configured to receive the HARQ feedback and the potential collision indication by the PSFCH resource with the same time and frequency domain.

40. The apparatus of claim 39, wherein the receiving unit is configured to receive a base sequence by using the PSFCH resource with the same time and frequency domain and determine the HARQ feedback and the potential collision indication according to the base sequence cyclically shifted.

41. The apparatus of claim 38, wherein the receiving unit is configured to receive the HARQ feedback by a PSFCH resource in a first frequency domain and receive the potential collision indication by a PSFCH resource in a second frequency domain.

42. The apparatus of claim 38, wherein the receiving unit is configured to receive the HARQ feedback at a first moment and receive the potential collision indication at a second moment, the second moment being earlier than the first moment.

43. A communication device, comprising:

a processor; and
a memory for storing instructions executable by the processor,
wherein the processor is configured to perform the communication method of any one of claims 1 to 13 or perform the communication method of any one of claims 14 to 26.

44. A non-transitory computer-readable storage medium, wherein when instructions in the storage medium are executed

**EP 4 280 497 A1**

by a processor, a UE is caused to perform the communication method of any one of claims 1 to 13 or perform the communication method of any one of claims 14 to 26.

**FIG. 1**

UEA detects that reserved resources in SCIs of UEB and UEC have resource overlap and sends a potential collision indication to UEB

reserved resources in two SCIs overlap

UEB reselect resource and select other resource

**FIG. 2**

sending a potential collision indication to a second UE in response to determining an impending resource collision on a reserved resource for data transmission by the second UE

S11

**FIG. 3**

sending a 1bit collision indication using this PSFCH resource

the reserved time-frequency resource field in the first phase SCI is decoded

$\triangle T \leq Tmax$ (a slot difference between a slot when the collision indication is sent and a clot when the impending resource conflict occurs)

when decoding the first stage SCI, it is found that there is overlapped on PSSCH resource

sub channel 1

frequency domain

sub channel 0

time domain

**FIG. 4**

sending a potential collision indication to a second UE by using a PSFCH resource mapped by a first PSSCH transmission resource

S21

**FIG. 5**

sending a potential collision indication and HARQ feedback to a second UE by using a PSFCH resource mapped by a first PSSCH transmission resource

S31

**FIG. 6**

carrying HARQ feedback and a potential collision indication by a first PSFCH format

S41

**FIG. 7**

sending HARQ feedback and a potential collision indication by multiplexing the HARQ feedback and the potential collision indication on the PSFCH resource with the same time and frequency domain

S51

**FIG. 8**

NACK feedback and potential collision occurred

ACK feedback and no potential collision

NACK feedback and no potential collision

ACK feedback and potential collision occurred

**FIG. 9**

S61

sending HARQ feedback by a PSFCH resource in a first frequency domain and sending a potential collision indication by a PSFCH resource in a second frequency domain

**FIG. 10**

obtaining first indication information and second indication information, the first indication information for indicating a PSFCH resource used for sending the HARQ feedback and the second indication information for indicating a PSFCH resource used for sending the potential collision indication

S71

**FIG. 11**

RRC independently configures a resource for a potential collision indication and a resource for HARQ feedback

frequency domain

a resource for HARQ feedback

FDM

a resource for a potential collision indication

time domain slot

**FIG. 12**

S81

sending the HARQ feedback at a first moment and sending the potential collision indication at a second moment

**FIG. 13**

S91

receiving a potential collision indication from a first UE

S92

performing resource selection according to the potential collision indication

**FIG. 14**

S101

receiving a potential collision indication from a first UE by using a PSFCH resource mapped by a first PSSCH transmission resource

**FIG. 15**

S111

receiving HARQ feedback and a potential collision indication by using a PSFCH resource mapped by a first PSSCH transmission resource

**FIG. 16**

S121

receiving HARQ feedback and a potential collision indication by a first PSFCH format

**FIG. 17**

S131

receiving HARQ feedback and a potential collision indication by the PSFCH resource with the same time and frequency domain

**FIG. 18**

S141

receiving HARQ feedback by a PSFCH resource in a first frequency domain and receiving a potential collision indication by a PSFCH resource in a second frequency domain

**FIG. 19**

S151

receiving HARQ feedback at a first moment and receiving a potential collision indication at a second moment, the second moment being earlier than the first moment

**FIG. 20**

103

100

101

receiving unit

processing unit

102

sending unit

**FIG. 21**

200

201

receiving unit

202

processing unit

**FIG. 22**

**FIG. 23**

## INTERNATIONAL SEARCH REPORT

| | International application No. |
|---|---|
| | **PCT/CN2021/071932** |

| A. | CLASSIFICATION OF SUBJECT MATTER |
|---|---|

H04L 1/18(2006.01)i; H04L 5/00(2006.01)i; H04W 72/04(2009.01)i; H04W 76/14(2018.01)i

According to International Patent Classification (IPC) or to both national classification and IPC

| B. | FIELDS SEARCHED |
|---|---|

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

EPODOC, WPI, CNPAT, CNKI, 3GPP: 资源, 信道, 冲突, 重合, 指示, 标识, 通知, resource, channel, conflict, collision, indicate, sidelink, PSFCH, HARQ

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 106550318 A (HYTERA COMMUNICATIONS CO., LTD.) 29 March 2017 (2017-03-29)<br>description, paragraphs [0077]-[0241], and figures 1-9 | 1-44 |
| X | CN 110972290 A (CHINA ACADEMY OF INFORMATION AND COMMUNICATIONS TECHNOLOGY) 07 April 2020 (2020-04-07)<br>description, paragraphs [0030]-[0067], and figures 1-4 | 1-44 |
| A | US 2020220669 A1 (KT CORPORATION) 09 July 2020 (2020-07-09)<br>entire document | 1-44 |
| A | CN 111526587 A (TELECOMMUNICATIONS SCIENCE AND TECHNOLOGY RESEARCH INSTITUTE CO., LTD.) 11 August 2020 (2020-08-11)<br>entire document | 1-44 |
| A | CN 111294175 A (BEIJING SPREADTRUM HIGH-TECH COMMUNICATIONS TECHNOLOGY CO., LTD.) 16 June 2020 (2020-06-16)<br>entire document | 1-44 |
| A | CN 110545533 A (CHINA ACADEMY OF INFORMATION AND COMMUNICATIONS TECHNOLOGY) 06 December 2019 (2019-12-06)<br>entire document | 1-44 |

☐ Further documents are listed in the continuation of Box C. ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 September 2021** | **29 September 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/071932**

| Patent document cited in search report | | | Publication date (day/month/year) | Patent family member(s) | | | Publication date (day/month/year) |
|---|---|---|---|---|---|---|---|
| CN | 106550318 | A | 29 March 2017 | EP | 3355643 | A1 | 01 August 2018 |
| | | | | WO | 2017049938 | A1 | 30 March 2017 |
| | | | | US | 2019098617 | A1 | 28 March 2019 |
| CN | 110972290 | A | 07 April 2020 | | None | | |
| US | 2020220669 | A1 | 09 July 2020 | CN | 111416700 | A | 14 July 2020 |
| | | | | KR | 2020085643 | A | 15 July 2020 |
| CN | 111526587 | A | 11 August 2020 | WO | 2020156163 | A1 | 06 August 2020 |
| CN | 111294175 | A | 16 June 2020 | | None | | |
| CN | 110545533 | A | 06 December 2019 | | None | | |

Form PCT/ISA/210 (patent family annex) (January 2015)